(19) Europäisches Patentamt
European Patent Office
Office européen des brevets

(11) **EP 4 657 337 A1**

(12) **EUROPEAN PATENT APPLICATION**
published in accordance with Art. 153(4) EPC

(43) Date of publication:
**03.12.2025 Bulletin 2025/49**

(21) Application number: **24780092.3**

(22) Date of filing: **25.03.2024**

(51) International Patent Classification (IPC):
**G06N 20/00** (2019.01)    **F24F 11/38** (2018.01)
**F24F 11/64** (2018.01)    **F24F 11/89** (2018.01)

(52) Cooperative Patent Classification (CPC):
**F24F 11/38; F24F 11/89; G06N 20/00;**
**F24F 2110/64**

(86) International application number:
**PCT/JP2024/011533**

(87) International publication number:
**WO 2024/203974 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **31.03.2023 JP 2023058419**

(71) Applicant: **Daikin Industries, Ltd.**
**Osaka-shi, Osaka 530-0001 (JP)**

(72) Inventors:
• **YOSHIMI, Manabu**
  **Osaka-Shi, Osaka 530-0001 (JP)**
• **IWANA, Issei**
  **Osaka-Shi, Osaka 530-0001 (JP)**
• **YAMADA, Shohei**
  **Osaka-Shi, Osaka 530-0001 (JP)**

(74) Representative: **Goddar, Heinz J.**
**Boehmert & Boehmert**
**Anwaltspartnerschaft mbB**
**Pettenkoferstrasse 22**
**80336 München (DE)**

(54) **APPARATUS CONTROL OR ABNORMALITY DETECTION SYSTEM, METHOD, AND PROGRAM**

(57)    A system according to an embodiment of the present disclosure performs device control or anomaly detection for a plurality of different devices without creating a prediction model dedicated to each device. The system includes a control unit configured to correct operational data of a device used as training data when creating the prediction model and operational data of a device in operation used as input to the prediction model when operating the system such that characteristics of the operational data of a part of or all of the devices approach characteristics of operational data of another device.

FIG.9

EP 4 657 337 A1

**Description**

Technical Field

The present disclosure relates to a system, method, and program for device control or anomaly detection.

Background Art

It is known to perform control or an anomaly detection for devices by using operational data of the devices and a prediction model. Since characteristics of operational data differ depending on characteristics of devices (e.g., types of devices), it appears necessary to create a prediction model according to the characteristics of each device such that prediction errors do not occur.

Citation List

Patent Document

[Patent Document 1] Japanese Patent No. 7152938

Summary of Invention

Technical Problem

However, it has not been easy to create a prediction model corresponding to the characteristics for each device (e.g., a prediction model for each type of a device).
It is an object of the present disclosure to perform device control or anomaly detection for a plurality of different devices without creating a dedicated prediction model for each individual device.

Solution to Problem

A system according to a first aspect of the present disclosure is a system for performing device control or anomaly detection for a plurality of different devices using a prediction model trained with training data. The system includes a control unit configured to correct operational data of a device used as training data when creating a prediction model and operational data of a device in operation used as input to the prediction model when operating the system such that characteristics of the operational data of a part of or all of the devices approach characteristics of operational data of another device.
According to the first aspect of the present disclosure, it is possible to perform device control or anomaly detection for a plurality of different devices without creating a dedicated prediction model for each device.
A second aspect of the present disclosure relates to the system according to the first aspect, wherein the training data is operational data of one type of a device among the plurality of types of devices, and the control unit corrects, when operating the system, characteristics of the operational data of the device other than the device used for the training data so as to approach the characteristics of the operational data of the device used for the training data.
According to the second aspect of the present disclosure, a prediction model that has already been created for a certain device can also be utilized for another device.
A third aspect of the present disclosure relates to the system according to the second aspect, wherein the operational data includes command values or state quantities related to components installed in the device, and the control unit corrects the command values or the state quantities based on mechanical characteristics of operational data of the components.
According to the third aspect of the present disclosure, it is possible to correct mechanical differences in the components installed in each device.
A fourth aspect of the present disclosure relates to the system according to the third aspect, wherein the components include an expansion valve, a compressor, and a blower of refrigeration and air-conditioning equipment.
According to the fourth aspect of the present disclosure, it is possible to correct mechanical differences in the expansion valve, compressor, and blower of each piece of refrigeration and air-conditioning equipment.
A fifth aspect of the present disclosure relates to the system according to the second aspect, wherein a probability ellipse of the operational data of the device used for the training data and a probability ellipse of the operational data of the device other than the device used for the training data are calculated by principal component analysis, and an affine transformation matrix is calculated to match the probability ellipse of the operational data of the device other than the device used for the training data with the probability ellipse of the operational data of the device used for the training data, and the operational data of the device other than the device used for the training data is corrected by the affine transformation matrix.

According to the fifth aspect of the present disclosure, even when information for correcting the mechanical differences in the components installed in each device is not available, the differences in data can be corrected by statistical methods.

A sixth aspect of the present disclosure relates to the system according to the first aspect, wherein the characteristics of the operational data of the another device, with which the characteristics of the operational data of the plurality of different devices are matched for correction, are characteristics of virtual operational data, and the control unit is configured to correct characteristics of operational data of devices so as to approach the characteristics of the virtual operational data when creating the prediction model, and perform machine learning using the corrected operational data as the training data; and correct characteristics of operational data of the devices in operation so as to approach the characteristics of the virtual operational data when operating the system, and input the corrected operational data to the prediction model.

According to the sixth aspect of the present disclosure, it is possible to perform device control or anomaly detection for the different devices by using only a single prediction model using the operational data of the plurality of different devices as the training data.

A seventh aspect of the present disclosure relates to the system according to the sixth aspect, wherein the control unit corrects the characteristics of the operational data based on mechanical characteristics of components installed in the devices from which the operational data is obtained.

According to the seventh aspect of the present disclosure, it is possible to correct differences based on the mechanical characteristics of the components installed in each device.

An eighth aspect of the present disclosure relates to the system according to the sixth aspect, wherein the control unit corrects the characteristics of the operational data based on statistical characteristics of the operational data.

According to an eighth aspect of the present disclosure, it is possible to correct differences based on the statistical characteristics.

A ninth aspect of the present disclosure relates to the system according to the eighth aspect, wherein the control unit converts the operational data by scaling such that the minimum value is 0 and the maximum value is 1.

According to the ninth aspect of the present disclosure, wherein when a range between the minimum value and the maximum value of the data is clearly defined, the accuracy of correction can be improved.

A tenth aspect of the present disclosure relates to the system according to the eighth aspect, wherein the control unit converts the operational data into Z-scores by scaling such that the mean is 0 and the variance is 1.

According to the tenth aspect of the present disclosure, the accuracy of correction can be improved even when there are large outliers in the data.

An eleventh aspect of the present disclosure relates to the system according to the eighth aspect, wherein the control unit converts the operational data into robust Z-scores.

According to the eleventh aspect of the present disclosure, the accuracy of the correction can be improved even when the data follows a non-normal distribution.

A twelfth aspect of the present disclosure is the system according to any one of the sixth to eleventh aspects, wherein the control unit re-corrects the corrected operational data and inputs the re-corrected operational data to the prediction model.

According to the twelfth aspect of the present disclosure, the accuracy of correction can be improved.

A thirteenth aspect of the present disclosure is a method executed by a control unit of a system for performing device control or anomaly detection for a plurality of different devices using a prediction model trained with training data. The method includes a step of correcting characteristics of operational data of a part or all of the devices so as to approach characteristics of operational data of another device, the correction being performed both before using the operational data of the devices as the training data when creating the prediction model, and before inputting the operational data of the devices in operation to the prediction model when operating the system.

A fourteenth aspect of the present disclosure is a program for causing a control unit of a system for performing device control or anomaly detection for a plurality of different devices using a prediction model trained with training data to execute a process including correcting characteristics of operational data of a part or all of the devices so as to approach characteristics of operational data of another device, the correction being performed both before using the operational data of a device used as the training data when creating the prediction model, and before inputting the operational data of the devices in operation to the prediction model when operating the system.

Brief Description of Drawings

EP 4 657 337 A1

[FIG. 1] FIG. 1 is a diagram illustrating differences between devices in the relationship between expansion valve opening degree and flow rate ratio.
[FIG. 2] FIG. 2 is a diagram illustrating differences between devices in the adiabatic efficiency of a compressor.
[FIG. 3] FIG. 3 is a diagram illustrating an outline of a first embodiment of the present disclosure.
[FIG. 4] FIG. 4 is a diagram illustrating an outline of a second embodiment of the present disclosure.
[FIG. 5] FIG. 5 is a diagram illustrating an overall configuration according to an embodiment of the present disclosure.
[FIG. 6] FIG. 6 is a diagram illustrating hardware configurations of a training apparatus and a prediction apparatus according to an embodiment of the present disclosure.
[FIG. 7] FIG. 7 is a diagram illustrating the first embodiment of the present disclosure.
[FIG. 8] FIG. 8 is a diagram illustrating the second embodiment of the present disclosure.
[FIG. 9] FIG. 9 is a diagram illustrating a functional block of a control unit of a training apparatus according to an embodiment of the present disclosure.
[FIG. 10] FIG. 10 is a functional block diagram of a control unit of a prediction apparatus according to an embodiment of the present disclosure.
[FIG. 11] FIG. 11 is an example of correction of expansion valve opening degree according to an embodiment of the present disclosure.
[FIG. 12] FIG. 12 is an example of correction of the compressor rotational speed according to an embodiment of the present disclosure.
[FIG. 13] FIG. 13 is an example of correction by affine transformation according to an embodiment of the present disclosure.
[FIG. 14] FIG. 14 is an example of a characteristic of a virtual expansion valve opening degree according to an embodiment of the present disclosure.
[FIG. 15] FIG. 15 is an example of correction of a expansion valve opening degree according to an embodiment of the present disclosure.
[FIG. 16] FIG. 16 is an example of correction by statistical processing according to an embodiment of the present disclosure.
[FIG. 17] FIG. 17 is a flowchart of a training process according to an embodiment of the present disclosure.
[FIG. 18] FIG. 18 is a flowchart of a prediction process according to an embodiment of the present disclosure.

Description of Embodiments

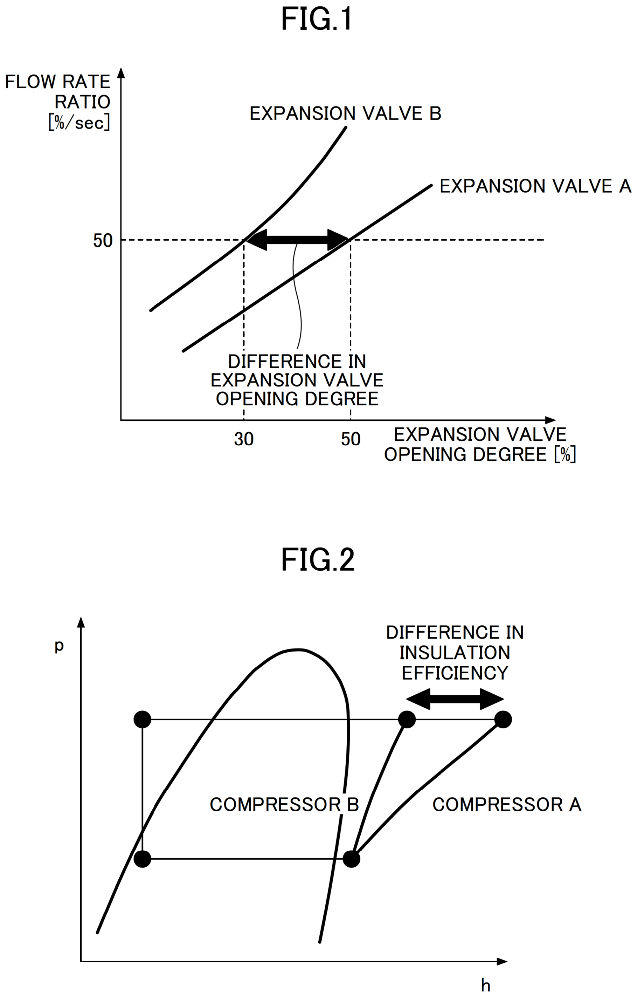

Embodiments of the present disclosure will be described below with reference to the drawings.
First, with reference to FIGS. 1 and 2, differences in characteristics of operational data between devices will be described. When the types of components such as the expansion valve or compressor differ between a device A (e.g., refrigeration and air-conditioning equipment) and a device B (e.g., refrigeration and air-conditioning equipment), the relationship between the expansion valve opening degree and the flow rate ratio, as well as the adiabatic efficiency of the compressor, will differ accordingly.
FIG. 1 is a diagram illustrating differences between devices in the relationship between expansion valve opening degree and flow rate ratio. FIG. 1 illustrates the relationship between the expansion valve opening degree (%) and the flow rate ratio (%/sec) for an expansion valve (expansion valve A) of the device A, and the relationship between the expansion valve opening degree (%) and the flow rate ratio (%/sec) for an expansion valve (expansion valve B) of the device B. As illustrated in FIG. 1, there is a difference in the expansion valve opening degree corresponding to the same flow rate ratio (e.g., 50%/sec); the expansion valve opening degree is 50% in expansion valve A and 30% in expansion valve B. Thus, the expansion valve opening degree varies depending on the devices.
FIG. 2 is a diagram illustrating differences between devices in the adiabatic efficiency of a compressor. FIG. 2 is a p-h diagram of a compressor (compressor A) of the device A and a p-h diagram of a compressor (compressor B) of the device B. As illustrated in FIG. 2, when there is a difference in adiabatic efficiency between the compressor A and the compressor B, a difference occurs in the discharge temperature and the discharge superheating degree between the compressor A and the compressor B even under the same conditions of condensing pressure and evaporating pressure.

<Outline>

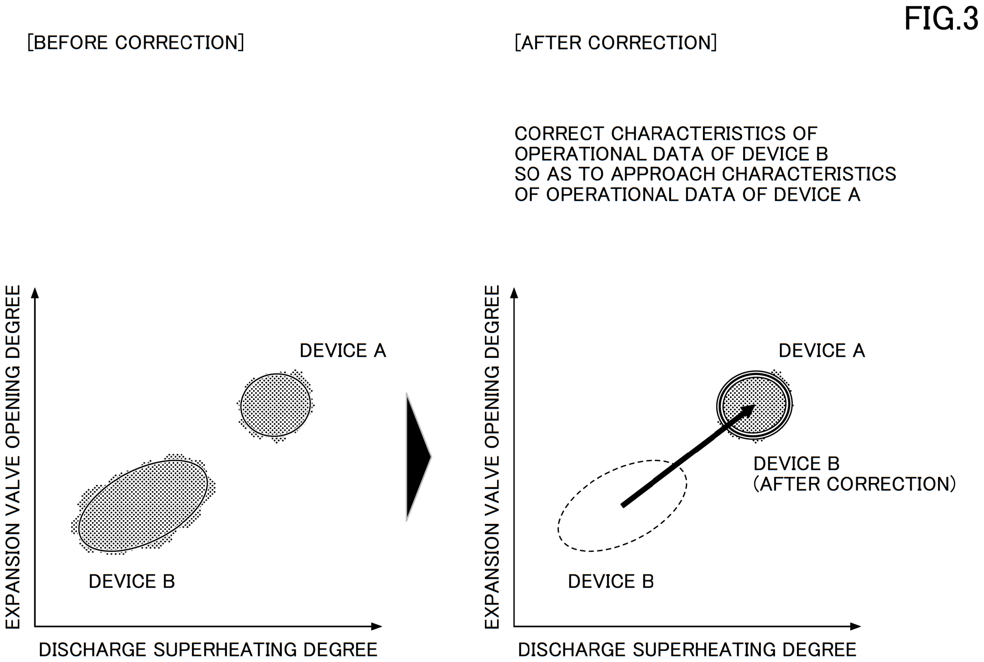

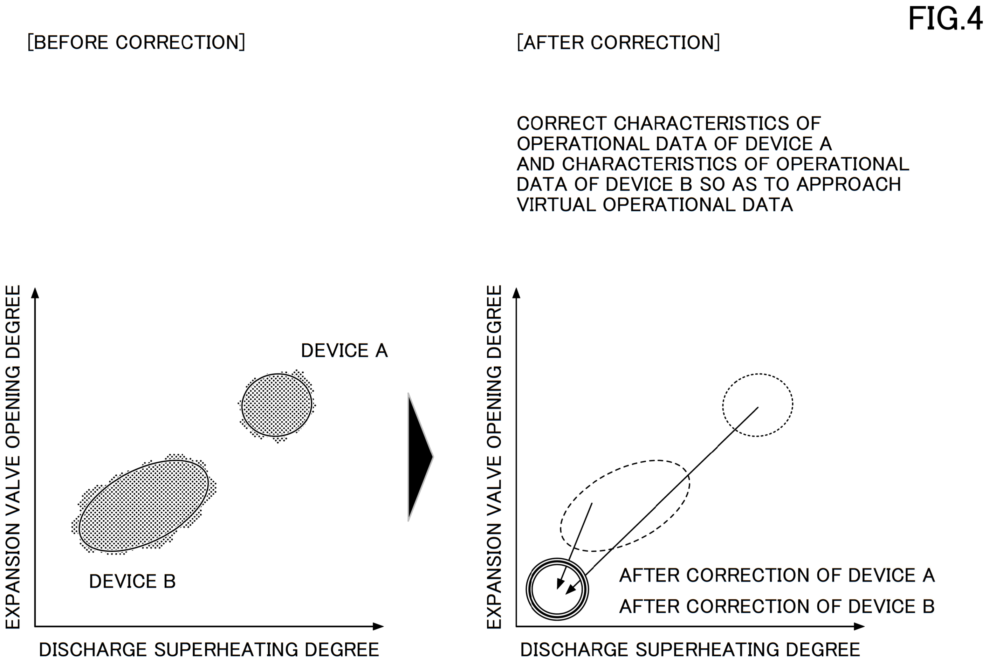

The first embodiment will be described in outline with reference to FIG. 3, and the second embodiment will be described with reference to FIG. 4. A case where operational data (e.g., an expansion valve opening degree and a discharge superheating degree) of refrigeration and air-conditioning equipment, which is an example of the device, is used will be described.

[First Embodiment]

FIG. 3 is a diagram illustrating an outline of the first embodiment of the present disclosure.

In FIG. 3, [BEFORE CORRECTION] illustrates a distribution of the expansion valve opening degree and the discharge superheating degree of the device A, and a distribution of the expansion valve opening degree and the discharge superheating degree of the device B (note that the characteristics of the device A and the characteristics of the device B are different (e.g., the type of the device A and the type of the device B are different)).

In the first embodiment, as illustrated in [AFTER CORRECTION] in FIG. 3, the operational data (expansion valve opening degree and discharge superheating degree) of the device B is corrected such that the characteristics of the operational data of the device B approach the characteristics of the operational data of the device A.

[Second Embodiment]

FIG. 4 is a diagram illustrating an outline of a second embodiment of the present disclosure.

In FIG. 4, [BEFORE CORRECTION] illustrates a distribution of the expansion valve opening degree and the discharge superheating degree of the device A, and a distribution of the expansion valve opening degree and the discharge superheating degree of the device B (note that the characteristics of the device A and the characteristics of the device B are different (e.g., the type of the device A and the type of the device B are different)).

In the second embodiment, as illustrated in [AFTER CORRECTION] in FIG. 4, the operational data (expansion valve opening degree and discharge superheating degree) of the device A is corrected such that the characteristics of the operational data of the device A approach the characteristics of the virtual operational data, and the operational data (expansion valve opening degree and discharge superheating degree) of the device B is corrected such that the characteristics of the operational data of the device B approach the characteristics of the virtual operational data.

<Overall Configuration>

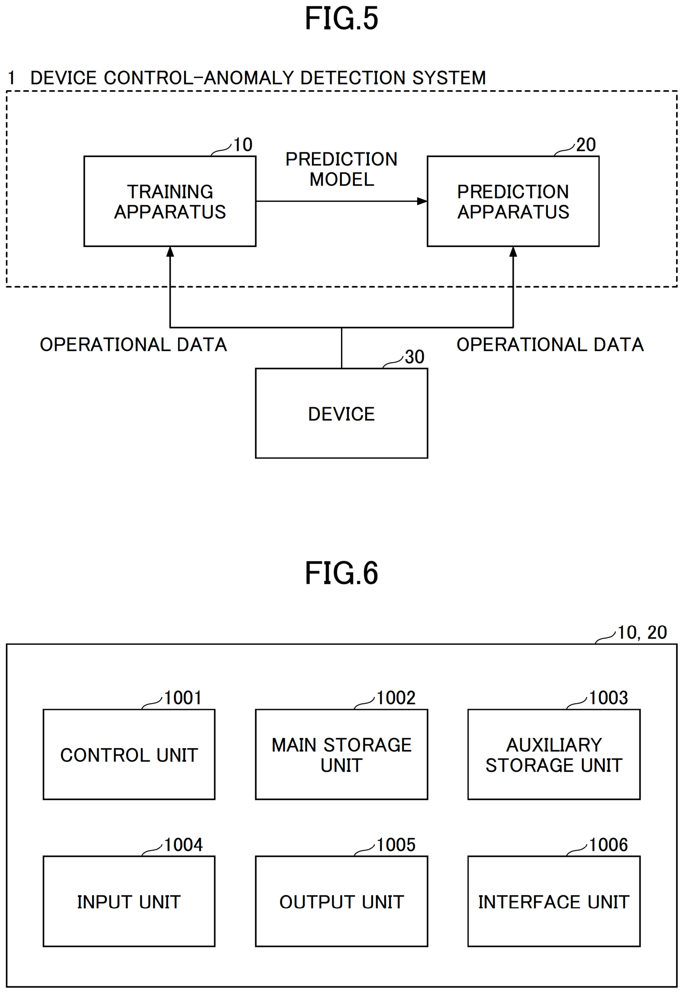

FIG. 5 is a diagram illustrating the overall configuration according to an embodiment of the present disclosure. The device control-anomaly detection system (hereinafter, also simply referred to as a "system") 1 may include a training apparatus 10 and a prediction apparatus 20. Although the training apparatus 10 and the prediction apparatus 20 are illustrated as separate apparatuses in FIG. 5, the training apparatus 10 and the prediction apparatus 20 may be provided as a single apparatus. Each of these will be described below.

<<Device Control-Anomaly Detection System>>

A device control-anomaly detection system 1 is a system for controlling a device 30 or detecting an anomaly in the device 30. In the present specification, the case of detecting the leakage of the refrigerant of the device 30 is described; however, the present disclosure is not limited to the detection of the leakage of the refrigerant, and can be applied to any control or any detection of anomaly.

<<Training Apparatus>>

The training apparatus 10 is an apparatus for creating a prediction model, which outputs information for controlling the device 30 or information for detecting an anomaly in the device 30 (e.g., a refrigerant amount (leakage amount or retention amount) of the device 30) when operational data of the device 30 is input. The training apparatus 10 is configured by one or more computers. The operational data input to the training apparatus 10 is, for example, previous operational data of the device 30 stored in a storage device (not illustrated).

<<Prediction Apparatus>>

The prediction apparatus 20 inputs the operational data of the device 30 to the prediction model created by the training apparatus 10, outputs information for controlling the device 30 or information for detecting anomaly in the device 30 (e.g., the refrigerant amount (leakage amount or retention amount) of the device 30), and controls the device 30 or detects an anomaly in the device 30. The prediction apparatus 20 is composed of one or more computers. The operational data input to the prediction apparatus 20 is, for example, real-time operational data acquired from the device 30 in operation.

<<Device>>

The device 30 may be any device. For example, the device 30 is a water-cooled chiller, which is a heat source device of a central air conditioning system. The water-cooled chiller has a refrigerant circuit in which a compressor, a condenser, an expansion valve, and an evaporator are connected by piping and a refrigerant circulates in the piping. The water-cooled chiller controls the suction superheating degree or the discharge superheating degree of the compressor to a constant value by changing the expansion valve opening degree. Water piping, separate from the refrigerant piping, is connected to the evaporator of the water-cooled chiller. An evaporator produces cold water by exchanging heat between a low-temperature refrigerant and water. In the case of an air-cooled water-cooled chiller, waste heat is discharged from the condenser to the outdoor air.

For example, a central air conditioning system includes a water-cooled chiller as a heat source device and a fan coil installed in a room. The water-cooled chiller and the fan coil are connected via water piping. The central air conditioning system supplies cold water from the evaporator of the cold water chiller to the fan coil, and cools the room by exchanging heat between the cold water and the room air. The central air-conditioning system cools the room continuously by returning the water, which has been heated by heat exchange with the fan coil, to the evaporator of the water-cooled chiller to cool it again.

<<Operational Data>>

The operational data is data that can be acquired during operation of the device 30. For example, the operational data is a control command value relating to a component mounted on the device 30, or a state quantity such as temperature, pressure, and current relating to the device 30. For example, the component includes at least one of an expansion valve of refrigeration and air-conditioning equipment, a compressor, and a blower.

<Hardware Configuration>

FIG. 6 is a diagram illustrating a hardware configuration of the training apparatus 10 and the prediction apparatus 20 according to an embodiment of the present disclosure. The training apparatus 10 and the prediction apparatus 20 may include a control unit 1001, a main storage unit 1002, an auxiliary storage unit 1003, an input unit 1004, an output unit 1005, and an interface unit 1006. Each of these units will be described below.

The control unit 1001 is a processor (e.g., a CPU (Central Processing Unit), a GPU (Graphics Processing Unit), or the like) that executes various programs installed in the auxiliary storage unit 1003.

The main storage unit 1002 includes a nonvolatile memory (ROM (Read Only Memory)) and a volatile memory (RAM (Random Access Memory)). The ROM stores various programs and data necessary for the control unit 1001 to execute various programs installed in the auxiliary storage unit 1003. The RAM provides a work area to be expanded when various programs installed in the auxiliary storage unit 1003 are executed by the control unit 1001.

The auxiliary storage unit 1003 is an auxiliary storage device that stores various programs and information used when the various programs are executed.

The input unit 1004 is an input device for the operator of the training apparatus 10 and the prediction apparatus 20 to input various instructions to the training apparatus 10 and the prediction apparatus 20.

The output unit 1005 is an output device that outputs the internal states of the training apparatus 10 and the prediction apparatus 20.

The interface unit 1006 is a communication device for connecting to a network and communicating with another device.

[First Embodiment]

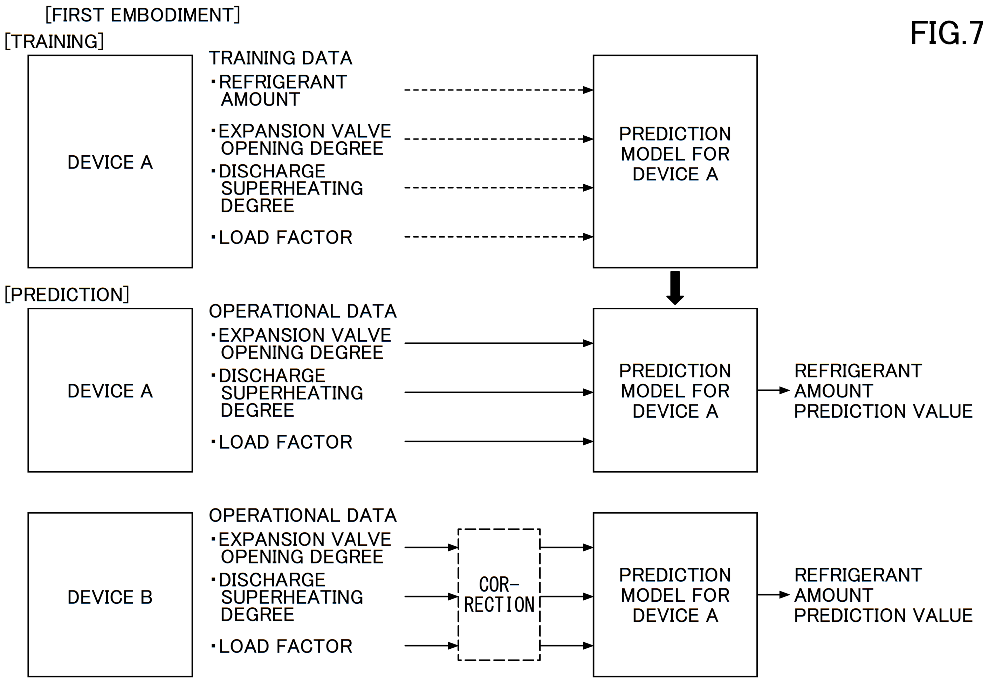

FIG. 7 is a diagram illustrating a first embodiment of the present disclosure. The devices A and B are devices having different characteristics (e.g., the types of the device A and device B are different, or a type of the device A is an older type of the device B, etc.).

For example, the training data includes the refrigerant amount (refrigerant leakage amount (leakage refrigerant amount) or the refrigerant retention amount (retention refrigerant amount) of the refrigeration and air-conditioning equipment, the opening degree of the expansion valve, the discharge superheating degree of the compressor, and the load factor of the refrigeration and air-conditioning equipment. For example, the prediction model predicts the refrigerant amount when operational data (expansion valve opening degree, discharge superheating degree, and load factor) are input.

[Training]

When performing training, a prediction model (i.e., a prediction model for the device A) is created using the data of the device A as training data.

[Prediction]

- When predicting the device A, the operational data (e.g., the expansion valve opening degree, the discharge superheating degree, and the load factor) of the device A in operation is input to the prediction model created in [Training], and the refrigerant amount is predicted.
- When predicting the device B, the operational data (e.g., the expansion valve opening degree, the discharge superheating degree, and the load factor) of the device B in operation is corrected such that the characteristics of the operational data of the device B approach the characteristics of the operational data of the device A. The corrected operational data of the device B is input to the prediction model created in the [Training] to predict the refrigerant amount.

In this way, in the first embodiment, the operational data of the device B is corrected such that the characteristics of the operational data of the device B approach the characteristics of the operational data of the device A (i.e., the operational data of the device which is training data for the prediction model), and then the operational data of the device B is input to the prediction model created using the data of the device A.

[Second Embodiment]

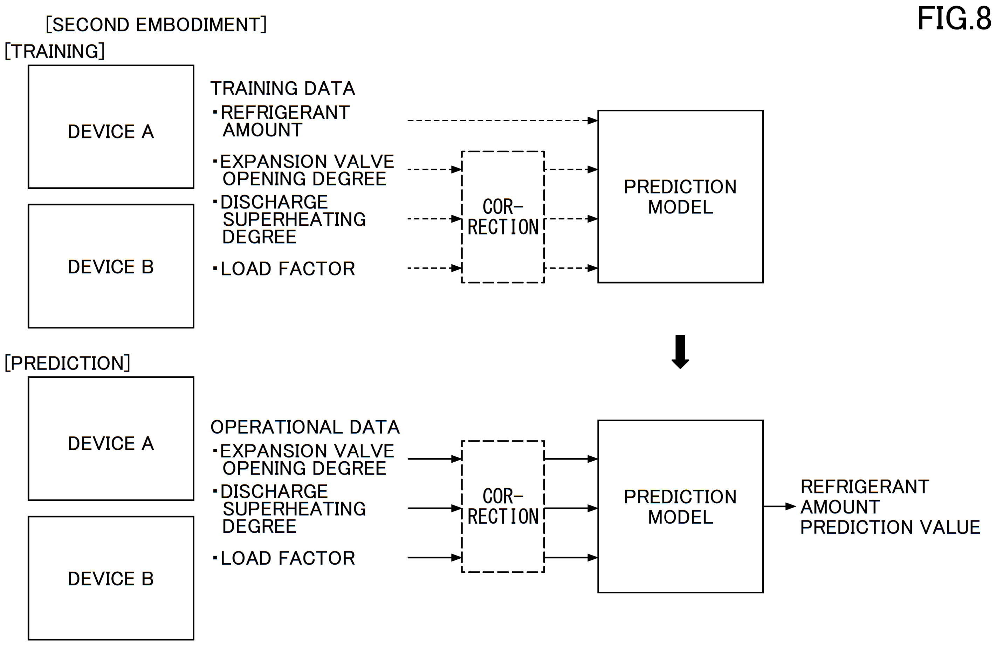

FIG. 8 is a diagram illustrating a second embodiment of the present disclosure. The device A and the device B are devices having different characteristics (e.g., For example, the type of device A is different from the type of device B.). Note that FIG. 8 illustrates two devices A and B; however, three or more devices A, B, C, ... may be used.

For example, the training data includes the refrigerant amount (the leakage refrigerant amount (the leakage amount) or the retention refrigerant amount (the retention amount) of the refrigeration and air-conditioning equipment, the expansion valve opening degree, the discharge superheating degree of the compressor, and the load factor of the refrigeration and air-conditioning equipment. For example, the prediction model predicts the refrigerant amount in the device when operational data (expansion valve opening degree, discharge superheating degree, and load factor) are input.

[Training]

When performing training, a prediction model is created using the data of the device A and the data of the device B which are training data.

- The operational data of the device A (e.g., the opening degree of the expansion valve, the discharge superheating degree, and the load factor) is corrected such that the characteristics of the operational data of the device A approach the characteristics of the virtual operational data.
- The operational data of the device B (e.g., the expansion valve opening degree, the discharge superheating degree, and the load factor) is corrected such that the characteristics of the operational data of the device B approach the characteristics of the virtual operational data.
- Then, a prediction model is created using the corrected operational data of the device A and the corrected operational data of the device B.

[Prediction]

- When predicting the device A, the operational data of the device A in operation (e.g., the expansion valve opening degree, the discharge superheating degree, and the load factor) is corrected such that the characteristics of the operational data of the device A approach the characteristics of the virtual operational data (the characteristics of the same virtual operational data as in the [Training]). The corrected operational data of the device A is input to the prediction model created in the [Training] to predict the refrigerant amount.

- When predicting the device B, the operational data of the device B in operation (e.g., the expansion valve opening degree, the discharge superheating degree, and the load factor) is corrected such that the characteristics of the operational data of the device B approach the characteristics of the virtual operational data (the characteristics of the same virtual operational data as in the [Training]). The corrected operational data of the device B is input to the prediction model created in the [Training] to predict the refrigerant amount.

The virtual operational data is not the operational data of the existing device (in this example, the device A and the device B) but is virtual operational data. The same virtual data is used for the training of the device A, the training of the device B, the prediction of the device A, and the prediction of the device B.

As described above, in the second embodiment, the operational data of the devices A and B are corrected such that the characteristics of the operational data of the devices A and B approach the characteristics of the virtual operational data. A prediction model is created using the corrected operational data of the devices A and B, and the corrected operational data of the device A or device B is input to the prediction model.

<Functional Block>

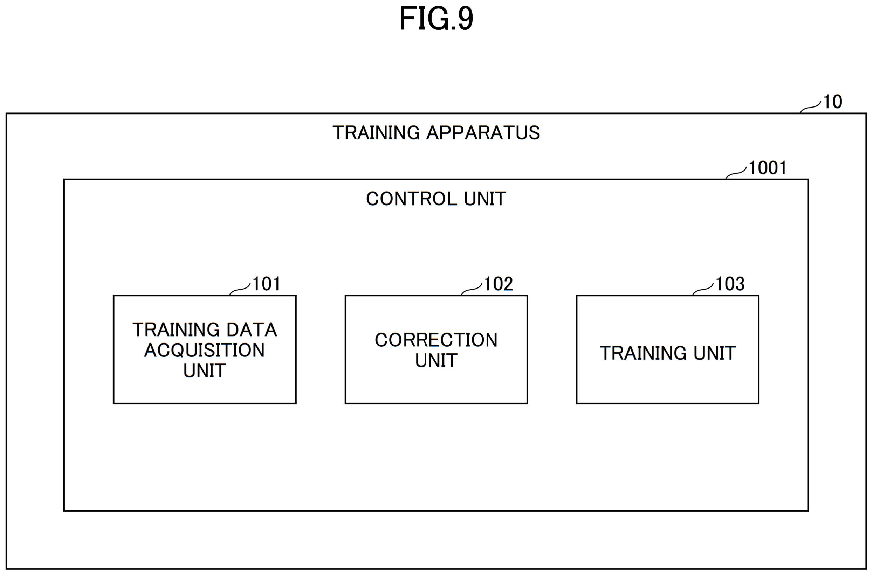

FIG. 9 is a diagram illustrating a functional block of the control unit 1001 of the training apparatus 10 according to an embodiment of the present disclosure. The control unit 1001 can include a training data acquisition unit 101, a correction unit 102, and a training unit 103. The control unit 1001 can function as the training data acquisition unit 101, the correction unit 102, and the training unit 103 by executing a program.

The training data acquisition unit 101 acquires training data.

In the case of the first embodiment, the training data acquisition unit 101 acquires operational data (e.g., expansion valve opening degree, discharge superheating degree, and load factor) and a refrigerant amount (a leakage amount or a retention amount) of a device (e.g., refrigeration and air-conditioning equipment) A.

In the case of the second embodiment, the training data acquisition unit 101 acquires operational data (e.g., expansion valve opening degree, discharge superheating degree, and load factor) and a refrigerant amount (leakage amount or retention amount) of the device (e.g., refrigeration and air-conditioning equipment) A, and operational data and a refrigerant amount of the device B.

The correction unit 102 corrects the operational data of a part of the devices in the case of the first embodiment, and corrects the operational data of all of the devices in the case of the second embodiment, of the data acquired by the training data acquisition unit 101.

In the case of the second embodiment, the correction unit 102 corrects the operational data of the device A (e.g., the expansion valve opening degree, the discharge superheating degree, and the load factor) such that the characteristics of the operational data of the device A approach the characteristics of the virtual operational data. The correction unit 102 corrects the operational data of the device B (e.g., the expansion valve opening degree, the discharge superheating degree, and the load factor) such that the characteristics of the operational data of the device B approach the characteristics of the virtual operational data.

The training unit 103 creates a prediction model that outputs the refrigerant amount of the device 30 when the operational data of the device 30 is input. The training apparatus 10 performs machine learning to determine parameters of a prediction model.

In the case of the first embodiment, the training unit 103 creates a prediction model using the operational data of the device A and the refrigerant amount acquired by the training data acquisition unit 101.

In the case of the second embodiment, the training unit 103 creates a prediction model using the operational data of the device A and the operational data of the device B corrected by the correction unit 102 and the refrigerant amount of the device A and the refrigerant amount of the device B acquired by the training data acquisition unit 101.

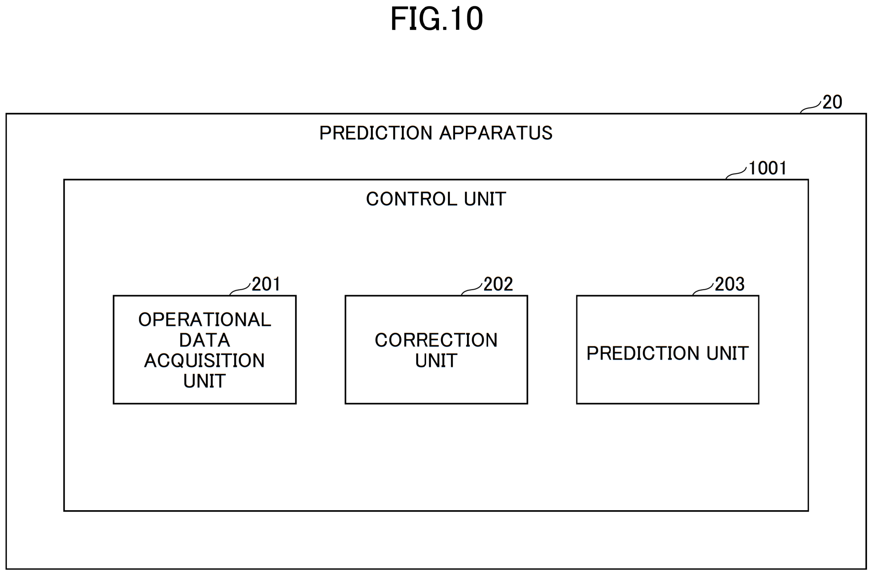

FIG. 10 is a diagram illustrating a functional block of the control unit 1001 of the prediction apparatus 20 according to an embodiment of the present disclosure. The control unit 1001 can include an operational data acquisition unit 201, a correction unit 202, and a prediction unit 203. The control unit 1001 can function as the operational data acquisition unit 201, the correction unit 202, and the prediction unit 203 by executing a program.

The operational data acquisition unit 201 acquires operational data of the device 30 in operation.

In the case of the first embodiment, the operational data acquisition unit 201 acquires operational data (e.g., expansion valve opening degree, discharge superheating degree, and load factor) of the device (e.g., refrigeration and air-conditioning equipment) A or operational data of the device B.

In the case of the second embodiment, the operational data acquisition unit 201 acquires operational data (e.g., expansion valve opening degree, discharge superheating degree, and load factor) of the device (e.g., refrigeration and air-conditioning equipment) A or operational data of the device B.

The correction unit 202 corrects the operational data of a part of the devices in the case of the first embodiment, and corrects the operational data of all of the devices in the case of the second embodiment, from among the data acquired by the operational data acquisition unit 201.

In the first embodiment, the correction unit 202 corrects the operational data of the device B (e.g., the expansion valve opening degree, the discharge superheating degree, and the load factor) such that the characteristics of the operational data of the device B approach the characteristics of the operational data of the device A.

In the case of the second embodiment, the correction unit 202 corrects the operational data of the device A (e.g., the expansion valve opening degree, the discharge superheating degree, and the load factor) such that the characteristics of the operational data of the device A approach the characteristics of the virtual operational data. The correction unit 102 corrects the operational data of the device B (e.g., the expansion valve opening degree, the discharge superheating degree, and the load factor) such that the characteristics of the operational data of the device B approach the characteristics of the virtual operational data.

The prediction unit 203 inputs the operational data of the device 30 to the prediction model to predict the refrigerant amount of the device 30.

In the case of the first embodiment, the prediction unit 203 inputs the operational data of the device A acquired by the operational data acquisition unit 201 to the prediction model to predict the refrigerant amount of the device A. The prediction unit 203 inputs the operational data of the device B corrected by the correction unit 202 to the prediction model to predict the refrigerant amount of the device B.

In the case of the second embodiment, the prediction unit 203 inputs the operational data of the device A corrected by the correction unit 202 to the prediction model to predict the refrigerant amount of the device A. The prediction unit 203 inputs the operational data of the device B corrected by the correction unit 202 to the prediction model to predict the refrigerant amount of the device B.

An example of the correction will be described below.

The training apparatus 10 and the prediction apparatus 20 can correct the operational data by any method.

For example, the training apparatus 10 and the prediction apparatus 20 can correct the operational data using a model created by machine learning (more specifically, a model in which the corrected operational data is output when the operational data before correction is input).

For example, the training apparatus 10 and the prediction apparatus 20 can correct the operational data using a regression equation (more specifically, a regression equation that calculates the corrected operational data when the operational data before correction is input).

For example, the training apparatus 10 and the prediction apparatus 20 can correct the operational data using a map (more specifically, a rule that defines a correspondence relationship between operational data before correction and corrected operational data).

First, the correction of the expansion valve opening degree will be described as an example of the first embodiment of the present disclosure.

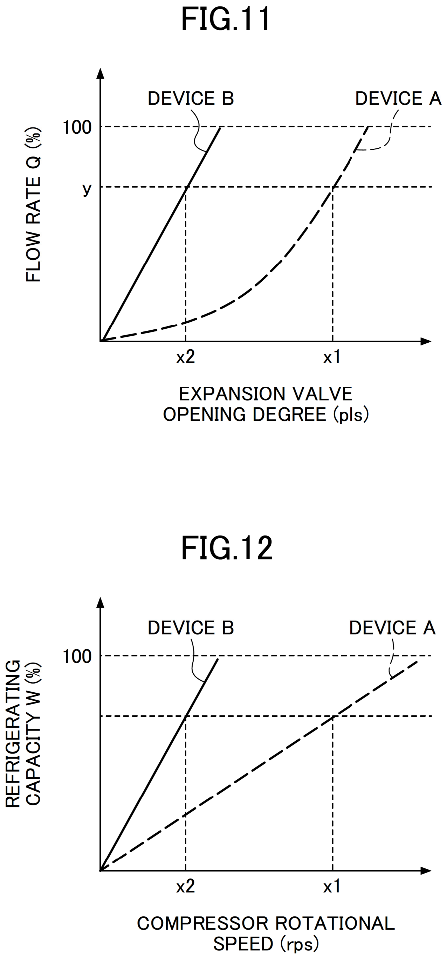

FIG. 11 illustrates a relationship between the opening degrees (pls) and the flow rates (%) of the expansion valves provided in the device A and the device B having different specifications. The two expansion valves have different expansion valve opening degree at 100% maximum flow. Therefore, the expansion valve opening degrees of the devices A and B at a certain intermediate flow rate y% are x1 and x2, respectively, which are different values. For example, when the prediction model trained from the data of the expansion valve opening degree and the flow rate of the device A is used in the device B, it is necessary to correct x2 to x1 before inputting the data. For this purpose, it is necessary to obtain a correction equation for correcting x2 to x1.

The correction equation for correcting x2 to x1 can be obtained from the mechanical characteristics of the expansion valves of device A and device B. When the flow rate characteristics Q1 and Q2 for the expansion valve opening degree of device A and device B are known, the following is obtained.

Expansion valve opening degree of device A: x1
Expansion valve opening degree of device B: x2
Expansion valve flow rate characteristics of device A:

$$Q1 = k1 \cdot x1\char`^2$$

Expansion valve flow rate characteristics of device B:

$$Q2 = k2 \cdot x2$$

When Q1 = Q2, then the equation (1) is established.

[Math 1]

$$x1 = \sqrt{(k2/k1)\cdot x2} \qquad \cdots \text{EQUATION (1)}$$

When the corrected expansion valve opening degree of the device B is x2', the correction equation (2) for x2 is derived by replacing x1 in the equation (1) with x2'.
[Math 2]

$$x2' = \sqrt{(k2/k1)\cdot x2} \qquad \cdots \text{EQUATION (2)}$$

In this way, when the operational data is a command value or a state quantity relating to a component mounted on the device 30, the operational data can be corrected based on the mechanical characteristics of the operational data of the component.

Next, an example of correction of the compressor rotational speed according to another embodiment of the present disclosure will be described.

FIG. 12 illustrates the relationship between the rotational speed (rps) of the compressor and the refrigeration capacity (%) of the compressor provided in the device A and the device B having different specifications. The two devices have different compressor rotational speeds at 100%, the maximum refrigeration capacity. Therefore, the respective compressor rotation speeds of the devices A and B at a certain intermediate refrigeration capacity y% are x1 and x2, which are different values. For example, when the prediction model trained from the data of the compressor rotation speed and the refrigeration capacity of the device A is used in the device B, it is necessary to correct x2 to x1 before inputting the data. For this purpose, it is necessary to obtain a correction equation for correcting x2 to x1.

The correction equation for correcting x2 to x1 can be obtained from the mechanical characteristics of the compressors of the device A and the device B. When the refrigerating capacities W1 and W2 for the compressor rotational speeds of the device A and the device B are known, the following relationships are obtained.

Compressor rotational speed of device A: x1
Compressor rotational speed of device B: x2
Refrigeration capacity of device A: W1 = k1•x1
Refrigeration capacity of device B: W2 = k2•x2
Corrected compressor rotational speed for device B: x2' When W1 = W2, the following equation (3) is established. From the equation (3), the equation (4) which is the correction equation of x2 is derived.

```
x1 = (k2/k1)•x2 ... EQUATION (3)

x2' = (k2/k1)•x2 ... EQUATION (4)
```

In this way, when the operational data is a command value or a state quantity relating to a component mounted on the device 30, the operational data can be corrected based on the mechanical characteristics of the operational data of the component.

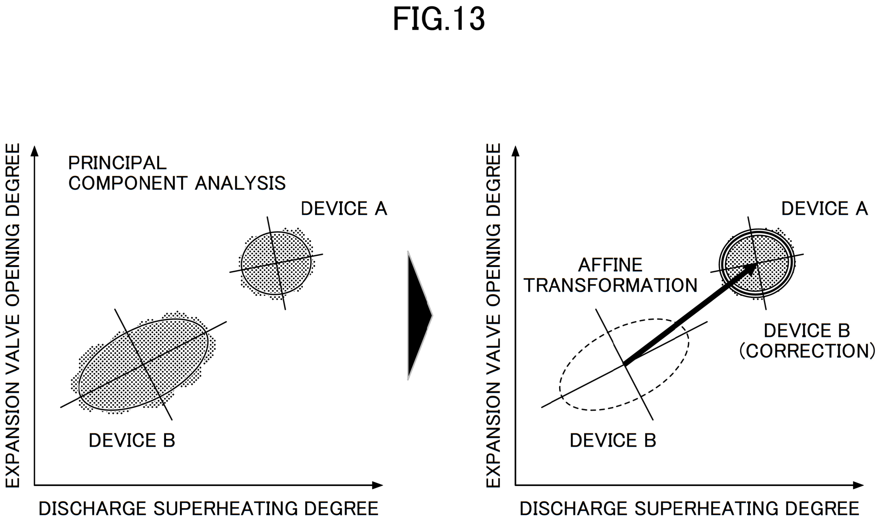

FIG. 13 is an example of correction by affine transformation according to an embodiment of the present disclosure. As described below, the operational data can be corrected by affine transformation.

- The probability ellipses of the operational data of a device (device A) used for the training data and the probability ellipses of the operational data of a device (device B) other than the device used for the training data are calculated by the principal component analysis (left figure of FIG. 13).
- Next, an affine transformation matrix is calculated to match the probability ellipse of the operational data of the device (device B) other than the device used for the training data with the probability ellipse of the operational data of the device (device A) used for the training data.
- Next, the operational data of the device (device B) other than the device used for the training data is corrected by the affine transformation matrix (right figure of FIG. 13).

[Math 3]

$$\begin{array}{ccc}\text{POST-}\\\text{TRANSFORMATION}\\\text{MATRIX}\end{array}\quad\begin{array}{ccc}\text{AFFINE}\\\text{TRANSFORMATION}\\\text{MATRIX}\end{array}\quad\begin{array}{ccc}\text{PRE-}\\\text{TRANSFORMATION}\\\text{MATRIX}\end{array}$$

$$\begin{bmatrix}X_n\\Y_n\\1\end{bmatrix}=\begin{bmatrix}\lambda\cos\theta & -\lambda\sin\theta & T_x\\\lambda\sin\theta & \lambda\cos\theta & T_y\\0 & 0 & 1\end{bmatrix}\begin{bmatrix}x_n\\y_n\\1\end{bmatrix}\quad\cdots\text{EQUATION (5)}$$

The equation (5) represents an affine transformation matrix. In this case, $\lambda$ is a scaling factor, $\theta$ is a rotation angle, and $T_x$ and $T_y$ are parallel translations in x and y directions.

It should be noted that, instead of a linear transformation (the aforementioned affine transformation), a nonlinear transformation (such as displacement of grid points and B-spline interpolation) may be used.

Next, an example of correction in the case of the second embodiment will be described. As an example of correction of the expansion valve opening degree according to an embodiment of the present disclosure, the expansion valves of the device A and the device B having different specifications illustrated in FIG. 11 are used.

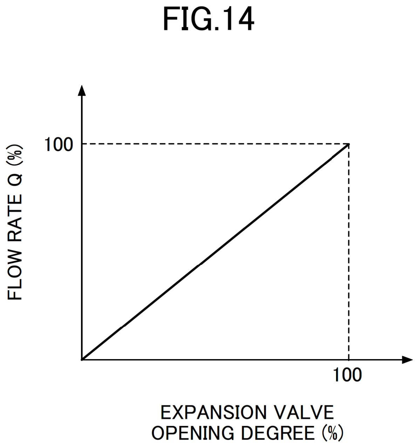

FIG. 14 illustrates the characteristic of the flow rate Q (%) with respect to the expansion valve opening degree (%) of the virtual expansion valve. The flow rate of the expansion valve is proportional to the expansion valve opening degree, and the flow rate becomes 100% at the maximum when the expansion valve opening degree is 100%. In the present embodiment, opening degree characteristics of the expansion valves of the device A and the device B are corrected so as to match the opening degree characteristics of the virtual expansion valve.

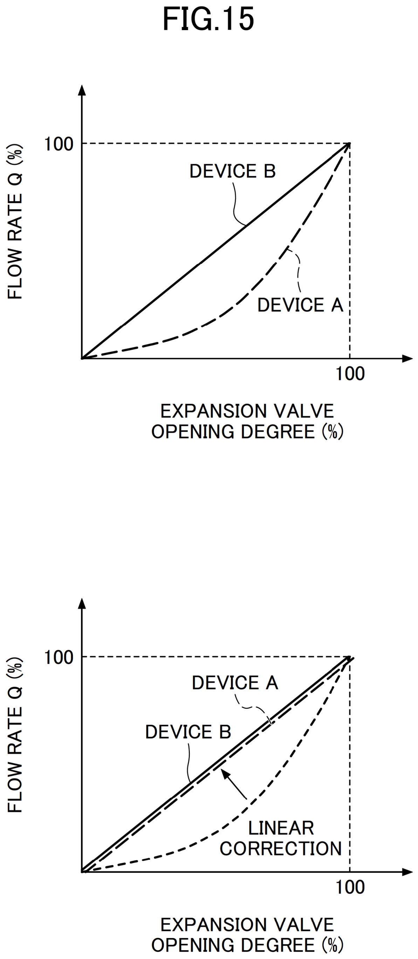

The upper part of FIG. 15 is a scale conversion of the expansion valve opening degree (pls) of the expansion valves provided in the device A and the device B to a percentage, where the maximum expansion valve opening degree is 100%. By this conversion, the flow rates of both devices A and B are at the maximum of 100% when the expansion valve opening degree is 100%. In the case of the device B, since the flow rate is proportional to the expansion valve opening degree, the characteristic of the expansion valve opening degree is corrected to match the characteristic of the virtual expansion valve by this conversion alone.

In contrast, in the case of the device A, the flow rate and the expansion valve opening degree have a non-linear relationship, and therefore, the characteristics of the device A do not match those of the virtual expansion valve simply by converting the expansion valve opening degree to a percentage (%). Therefore, as illustrated in the lower part of FIG. 15, after the expansion valve opening degree of the device A is converted into a percentage (%), the nonlinear characteristic with respect to the flow rate is corrected to be linearized, such that the characteristic can be matched with the characteristic of the virtual expansion valve. When the relational expression between the expansion valve opening degree (pls) and the flow rate (%) of the device A is known, such correction can be easily performed by first obtaining the inverse function of the expression in which the expansion valve opening degree in the relational expression is changed to a percentage (%), and then inputting the value of the device A to the inverse function.

Thus, it is possible to correct the characteristics of the operational data based on the mechanical characteristics of the components installed in the devices from which the operational data is obtained.

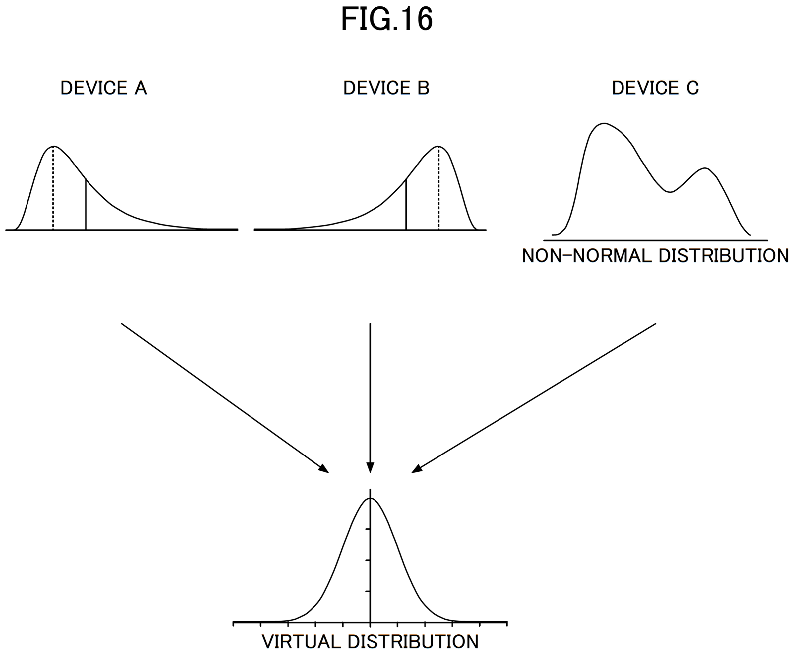

FIG. 16 is an example of correction by statistical processing according to an embodiment of the present disclosure. The operational data of each device (i.e., device A, device B, device C, ...) can be corrected such that a distribution of the operational data of the device A, a distribution of the operational data of the device B, a distribution of the operational data of the device C, ... approach a virtual distribution. The distribution of the operational data of each device may be a normal distribution or a non-normal distribution. Specific examples are described below.

For example, the operational data of each device can be corrected by converting (i.e., normalizing) the data by scaling the minimum value to 0 and the maximum value to 1. This method is suitable in cases where the distribution of operational data of each device can be regarded as a uniform distribution without outliers.

For example, the operational data of each device can be corrected by scaling such that the mean is 0 and the variance of 1 to convert the operational data to Z-scores. This method is suitable for the case where the distribution of the operational data of each device can be regarded as a normal distribution.

For example, the operational data of each device can be corrected by converting the operational data into a robust Z-score. It is suitable in cases that the distribution of the operational data of each device is non-normal distribution.

[Re-correction]

For example, the correction unit 202 may re-correct the already corrected operational data, and the prediction unit 203 may input the re-corrected operational data to the prediction model. Specifically, in the case of operational data exhibiting non-normal distributions, such as those illustrated for devices A, B, and C in FIG. 16 (e.g., a distribution skewed to the left or right, or a distribution with multiple peaks), each method (e.g., logarithmic transformation, exponential transformation, or Box-Cox transformation) may be used to correct the non-normal distribution to a normal distribution. For example, when the operational data of the devices A, B, and C are corrected from a non-normal distribution to a normal distribution, the corrected data may still have different means and variances, resulting in differing distribution shapes despite each being a normal distribution. Therefore, by further converting the corrected operational data into z-scores, it becomes possible to re-correct the data such that the shapes of the respective normal distributions match, thereby enabling the operational data to be treated as equivalent operational data.

<Method>

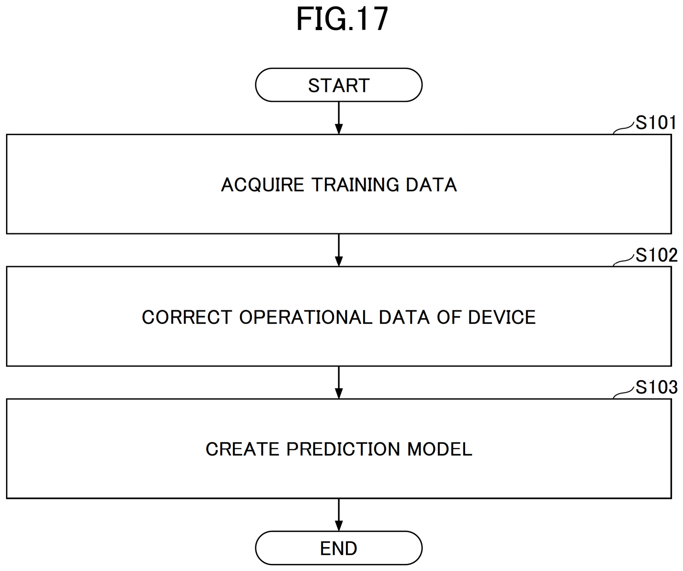

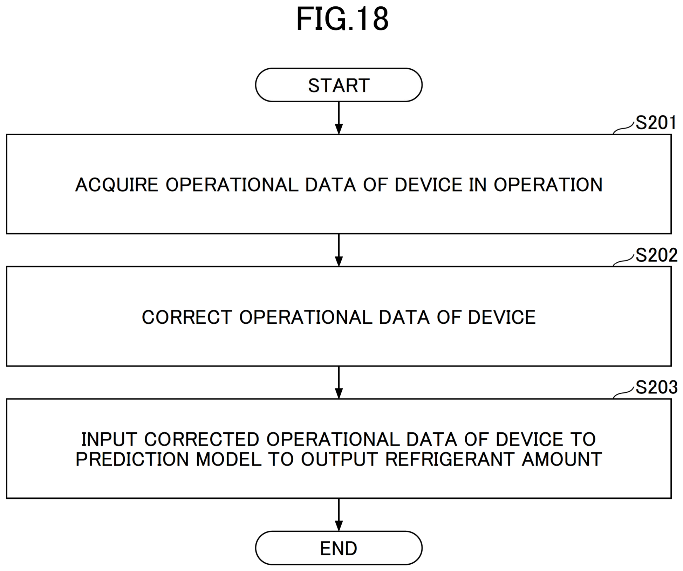

A training process method will be described with reference to FIG. 17, and a prediction processing method will be described with reference to FIG. 18.

[Training Process]

FIG. 17 is a flowchart of a training process according to an embodiment of the present disclosure.
In step 101 (S101), the training apparatus 10 acquires training data.
In step 102 (S102), the training apparatus 10 corrects the operational data of the device 30.
In step 103 (S103), the training apparatus 10 creates a prediction model.

[First Embodiment]

The case of the above-described first embodiment will be described.

- The training apparatus 10 acquires training data (more specifically, operational data of the device (e.g., operational data of the device A) and information for controlling the device or information for detecting anomaly in the device (e.g., the refrigerant amount of the device A)).
- Next, the training apparatus 10 creates a prediction model using the acquired training data.

[Second Embodiment]

The case of the above-described second embodiment will be described.

- The training apparatus 10 acquires training data (more specifically, operational data of devices (e.g., operational data of the device A, operational data of the device B, ...), and information for controlling the devices or information for detecting anomalies in the devices (e.g., refrigerant amount of the device A, refrigerant amount of the device B, ...)).
- Next, the training apparatus 10 corrects the acquired operational data of the devices (the operational data of the device A, the operational data of the device B, ...) such that the characteristics of the acquired operational data of the devices (operational data of the device A, operational data of the device B, ...) approach characteristics of virtual operational data.
- Next, the training apparatus 10 creates a prediction model using the corrected operational data of the devices (i.e., the corrected operational data of the device A, the corrected operational data of the device B, ...) and information for controlling the devices or information for detecting anomalies in the devices (the refrigerant amount of the device A, the refrigerant amount of the device B, ...).

[Prediction Process]

FIG. 18 is a flowchart of a prediction process according to an embodiment of the present disclosure.
In step 201 (S201), the prediction apparatus 20 acquires operational data of the device 30 in operation.
In step 202 (S202), the prediction apparatus 20 corrects the operational data of the device 30 acquired in S201.
In step 203 (S203), the prediction apparatus 20 inputs the operational data of the device 30 corrected in S202 to the prediction model to predict the refrigerant amount.

[First Embodiment]

The case of the first embodiment will be described.

- The prediction apparatus 20 acquires operational data of a device during operation (e.g., operational data of the device B).

- Next, the prediction apparatus 20 corrects the acquired operational data of the device (i.e., the operational data of the device B) such that characteristics of the acquired operational data of the device (i.e., the operational data of the device B) approach characteristics of operational data of a device (i.e., operational data of the device A) used as training data for a prediction model.
- Next, the prediction apparatus 20 inputs the corrected operational data of the device (i.e., the operational data of the device B) to the prediction model (the prediction model created by using the operational data of the device A as training data) to predict a refrigerant amount.

[Second Embodiment]

The case of the second embodiment will be described.

- The prediction apparatus 20 acquires operational data of a device in operation (e.g., any one of operational data of the device A, operational data of the device B, ...).
- Next, the prediction apparatus 20 corrects the acquired operational data of the device (i.e., any one of the operational data of the device A, the operational data of the operational data of the device B, ...) such that characteristics of the acquired operational data of the device (i.e., any one of the operational data of the device A, the operational data of the device B, ...) approach characteristics of virtual operational data.
- Next, the prediction apparatus 20 inputs the corrected operational data of the device (i.e., any one of the operational data of the device A, the operational data of the device B, ...) to a prediction model (a prediction model created by using the corrected operational data of the device A, the corrected operational data of the device B, ... as training data) to predict a refrigerant amount.

According to the embodiments of the present disclosure described above, it is possible to provide a system 1 for performing device control or anomaly detection for a plurality of different devices using a prediction model trained with training data. The system 1 includes a control unit 1001 configured to correct operational data of a device used as training data when creating a prediction model and operational data of a device in operation used as input to the prediction model when operating the system 1 such that characteristics of the operational data of a part or all of the devices approach characteristics of operational data of another device.

This makes it possible to perform control or anomaly detection of the plurality of different devices without creating a dedicated prediction model for each device.

Preferably, the training data is operational data of one type of a device (e.g., an old-type device) among a plurality of different types of devices, and the control unit 1001 corrects, when operating the system 1, characteristics of operational data of a device (e.g., a new-type device) other than the device used for the training data such that the characteristics of the operational data of the device (e.g., the new-type device) approach the characteristics of the operational data of the device (e.g., the old-type device) used for the training data. Thus, the prediction model already created for one device (e.g., an old-type device) can be used for another device (e.g., a new-type device).

Preferably, the operational data includes command values or state quantities related to components installed in the device, and the control unit 1001 corrects the command values or state quantities based on mechanical characteristics of operational data of the components. This makes it possible to correct differences in mechanical characteristics of the components installed in each device.

Preferably, the components include an expansion valve, a compressor, and a blower of refrigeration and air-conditioning equipment. This makes it possible to correct mechanical differences in the expansion valve, the compressor, and the blower of each piece of refrigeration and air-conditioning equipment.

Preferably, the probability ellipse of the operational data of the device used for the training data and the probability ellipse of the operational data of the device other than the device used for the training data are calculated by principal component analysis. Subsequently, an affine transformation matrix is calculated to match the probability ellipse of the operational data of the device other than the device used for the training data with the probability ellipse of the operational data of the device used for the training data. Then, the operational data of the device other than the device used for the training data is corrected by the affine transformation matrix. Thus, even when there is no information for correcting the mechanical differences in the components installed in each device, the differences in data can be corrected by statistical methods.

Preferably, the characteristics of the operational data of another device, with which the characteristics of operational data of the plurality of different devices are matched for correction, are characteristics of virtual operational data. The control unit 1001 corrects the characteristics of the operational data of the devices (e.g., device A, device B, ...) so as to approach the characteristics of the virtual operational data when creating the prediction model, performs machine learning using the corrected operational data as training data, corrects the characteristics of the operational data of the devices in operation (e.g., device A, device B, ...) so as to approach the characteristics of the virtual operational data when operating the system 1, and inputs the corrected operational data to the prediction model. Accordingly, it is possible to perform device control or anomaly detection for the different devices (e.g., device A, device B, ...) using only a single prediction model trained with the operational data of the plurality of different devices as training data.

Preferably, the control unit 1001 corrects the characteristics of the operational data based on mechanical characteristics of components installed in the devices from which the operational data is obtained. This makes it possible to correct differences in mechanical characteristics of the components installed in each device.

Preferably, the control unit 1001 corrects the characteristics of the operational data based on statistical characteristics of the operational data. This makes it possible to correct differences in the statistical characteristics.

Preferably, the control unit 1001 converts the operational data by scaling such that the minimum value is 0 and the maximum value is 1. This makes it possible to improve the accuracy of correction when a range between the minimum and maximum values of the data is clearly defined.

Preferably, the control unit 1001 converts the operational data into Z-scores by scaling such that the mean is 0 and the variance is 1. This makes it possible to improve the accuracy of correction even when the data includes large outliers.

Preferably, the control unit 1001 converts the operational data into robust Z-scores. This makes it possible to improve the accuracy of correction even when the data follows a non-normal distribution.

Preferably, the control unit 1001 re-corrects the corrected operational data and inputs the re-corrected operational data to the prediction model. This can improve the accuracy of correction.

According to an embodiment of the present disclosure, a method executed by a control unit 1001 of a system 1 for performing device control or anomaly detection for a plurality of different devices using a prediction model trained with training data may be provided. The method includes a step of correcting characteristics of operational data of a part or all of the devices so as to approach characteristics of operational data of another device, the correction being performed both before using the operational data of the devices used as the training data when creating the prediction model, and before inputting the operational data of the devices in operation to the prediction model when operating the system 1.

According to an embodiment of the present disclosure, a program for causing a control unit 1001 of a system 1 for performing device control or anomaly detection for a plurality of different devices using a prediction model trained with training data may be provided. The program, when executed, causes to the control unit 1001 to execute a process including correcting characteristics of operational data of a part or all of the devices so as to approach characteristics of operational data of another device, the correction being performed both before using the operational data of the devices used as the training data when creating the prediction model, and before inputting the operational data of the devices in operation to the prediction model when operating the system 1.

While the embodiments have been described above, it will be appreciated that various changes in form and detail are possible without departing from the spirit and scope of the claims.

The present international application is based upon and claims priority to Japanese patent application No. 2023-058419 filed on March 31, 2023, the entire contents of which are incorporated herein by reference.

Reference Signs List

| 1 | device control-anomaly detection system |
|---|---|
| 10 | training apparatus |
| 20 | prediction apparatus |
| 30 | device |
| 101 | training data acquisition unit |
| 102 | correction unit |
| 103 | training unit |
| 201 | operational data acquisition unit |
| 202 | correction unit |
| 203 | prediction unit |
| 1001 | control unit |
| 1002 | main storage unit |
| 1003 | auxiliary storage unit |
| 1004 | input unit |
| 1005 | output unit |
| 1006 | interface unit |

**Claims**

1. A system for performing device control or anomaly detection for a plurality of different devices using a prediction model trained with training data, the system comprising:
   a control unit configured to

   correct characteristics of operational data of the devices to approach characteristics of virtual operational data when creating the prediction model, and perform machine learning using the corrected operational data as training data; and
   correct characteristics of operational data of the devices in operation to approach the characteristics of the virtual operational data when operating the system, and input the corrected operational data to the prediction model.

2. The system according to claim 1, wherein the control unit is further configured to correct the characteristics of the operational data based on mechanical characteristics of components installed in the devices from which the operational data is obtained.

3. The system according to claim 1, wherein the control unit is further configured to correct the characteristics of the operational data based on statistical characteristics of the operational data.

4. The system according to claim 3, the control unit is further configured to convert the operational data by scaling such that a minimum value of the operational data is 0 and a maximum value is 1.

5. The system according to claim 3, wherein the control unit is further configured to convert the operational data into Z-scores by scaling such that a mean value of the operational data is 0 and a variance is 1.

6. The system according to claim 3, wherein the control unit is further configured to convert the operational data into robust Z-scores.

7. The system according to any one of claims 1 to 6, wherein the control unit is further configured to re-correct the corrected operational data and input the re-corrected operational data to the prediction model.

8. A method executed by a control unit of a system for performing device control or anomaly detection for a plurality of different devices using a prediction model trained with training data, the method comprising:

   correcting characteristics of operational data of the devices to approach characteristics of virtual operational data when creating the prediction model, and performing machine learning using the corrected operational data as training data; and
   correcting characteristics of operational data of the devices in operation to approach the characteristics of the virtual operational data when operating the system, and inputting the corrected operational data to the prediction model.

9. A program for causing a control unit of a system for performing device control or anomaly detection for a plurality of different devices using a prediction model trained with training data to execute a process, the process comprising:

   correcting characteristics of operational data of the devices to approach characteristics of virtual operational data when creating the prediction model, and performing machine learning using the corrected operational data as training data; and
   correcting characteristics of operational data of the devices in operation to approach the characteristics of the virtual operational data when operating the system, and inputting the corrected operational data to the prediction model.

# FIG.1

# FIG.2

# FIG.3

[BEFORE CORRECTION]

[AFTER CORRECTION]

CORRECT CHARACTERISTICS OF
OPERATIONAL DATA OF DEVICE B
SO AS TO APPROACH CHARACTERISTICS
OF OPERATIONAL DATA OF DEVICE A

DEVICE A

DEVICE B

DEVICE A

DEVICE B
(AFTER CORRECTION)

DEVICE B

EXPANSION VALVE OPENING DEGREE

DISCHARGE SUPERHEATING DEGREE

EXPANSION VALVE OPENING DEGREE

DISCHARGE SUPERHEATING DEGREE

EP 4 657 337 A1

## FIG.4

[BEFORE CORRECTION]

DEVICE A

DEVICE B

EXPANSION VALVE OPENING DEGREE

DISCHARGE SUPERHEATING DEGREE

[AFTER CORRECTION]

CORRECT CHARACTERISTICS OF OPERATIONAL DATA OF DEVICE A AND CHARACTERISTICS OF OPERATIONAL DATA OF DEVICE B SO AS TO APPROACH VIRTUAL OPERATIONAL DATA

AFTER CORRECTION OF DEVICE A

AFTER CORRECTION OF DEVICE B

EXPANSION VALVE OPENING DEGREE

DISCHARGE SUPERHEATING DEGREE

# FIG.5

1 DEVICE CONTROL-ANOMALY DETECTION SYSTEM

```
                                      PREDICTION
              ___10                    MODEL              ___20
         ┌──────────────┐                          ┌──────────────┐
         │   TRAINING   │ ──────────────────────▶  │  PREDICTION  │
         │  APPARATUS   │                          │  APPARATUS   │
         └──────────────┘                          └──────────────┘
```

OPERATIONAL DATA          OPERATIONAL DATA

```
                        ___30
                   ┌──────────────┐
                   │    DEVICE    │
                   └──────────────┘
```

# FIG.6

10, 20

| CONTROL UNIT | MAIN STORAGE UNIT | AUXILIARY STORAGE UNIT |
|---|---|---|
| 1001 | 1002 | 1003 |
| INPUT UNIT | OUTPUT UNIT | INTERFACE UNIT |
| 1004 | 1005 | 1006 |

FIG.7

[FIRST EMBODIMENT]

[TRAINING]

DEVICE A

TRAINING DATA
· REFRIGERANT AMOUNT
· EXPANSION VALVE OPENING DEGREE
· DISCHARGE SUPERHEATING DEGREE
· LOAD FACTOR

PREDICTION MODEL FOR DEVICE A

[PREDICTION]

DEVICE A

OPERATIONAL DATA
· EXPANSION VALVE OPENING DEGREE
· DISCHARGE SUPERHEATING DEGREE
· LOAD FACTOR

PREDICTION MODEL FOR DEVICE A

REFRIGERANT AMOUNT PREDICTION VALUE

DEVICE B

OPERATIONAL DATA
· EXPANSION VALVE OPENING DEGREE
· DISCHARGE SUPERHEATING DEGREE
· LOAD FACTOR

COR-RECTION

PREDICTION MODEL FOR DEVICE A

REFRIGERANT AMOUNT PREDICTION VALUE

EP 4 657 337 A1

FIG.8

[SECOND EMBODIMENT]

[TRAINING]

DEVICE A

TRAINING DATA

·REFRIGERANT
AMOUNT

·EXPANSION VALVE
OPENING DEGREE

·DISCHARGE
SUPERHEATING
DEGREE

DEVICE B

·LOAD FACTOR

COR-
RECTION

PREDICTION
MODEL

[PREDICTION]

DEVICE A

OPERATIONAL DATA

·EXPANSION VALVE
OPENING DEGREE

·DISCHARGE
SUPERHEATING
DEGREE

DEVICE B

·LOAD FACTOR

COR-
RECTION

PREDICTION
MODEL

REFRIGERANT
AMOUNT
PREDICTION VALUE

EP 4 657 337 A1

# FIG.9

TRAINING APPARATUS 10

CONTROL UNIT 1001

TRAINING DATA ACQUISITION UNIT 101

CORRECTION UNIT 102

TRAINING UNIT 103

EP 4 657 337 A1

# FIG.10

EP 4 657 337 A1

# FIG.11

# FIG.12

FIG.13

# FIG.14

# FIG.15

# FIG.16

DEVICE A

DEVICE B

DEVICE C

NON-NORMAL DISTRIBUTION

VIRTUAL DISTRIBUTION

EP 4 657 337 A1

# FIG.17

START

S101

ACQUIRE TRAINING DATA

S102

CORRECT OPERATIONAL DATA OF DEVICE

S103

CREATE PREDICTION MODEL

END

# FIG.18

START

S201

ACQUIRE OPERATIONAL DATA OF DEVICE IN OPERATION

S202

CORRECT OPERATIONAL DATA OF DEVICE

S203

INPUT CORRECTED OPERATIONAL DATA OF DEVICE TO
PREDICTION MODEL TO OUTPUT REFRIGERANT AMOUNT

END

## INTERNATIONAL SEARCH REPORT

| International application No. |
|---|
| **PCT/JP2024/011533** |

### A. CLASSIFICATION OF SUBJECT MATTER

*G06N 20/00*(2019.01)i; *F24F 11/38*(2018.01)i; *F24F 11/64*(2018.01)i; *F24F 11/89*(2018.01)i
FI: G06N20/00; F24F11/64; F24F11/89; F24F11/38

According to International Patent Classification (IPC) or to both national classification and IPC

### B. FIELDS SEARCHED

Minimum documentation searched (classification system followed by classification symbols)

G06N20/00; F24F11/38; F24F11/64; F24F11/89

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-70115 A (KYOCERA DOCUMENT SOLUTIONS INC.) 07 May 2020 (2020-05-07) paragraphs [0117]-[0146], fig. 5-9 | 1, 3-6, 8-9 |
| A | paragraphs [0117]-[0146], fig. 5-9 | 2, 7 |
| A | JP 2020-187516 A (HITACHI, LTD.) 19 November 2020 (2020-11-19) claim 1 | 1-9 |
| A | JP 6-67705 A (HITACHI, LTD.) 11 March 1994 (1994-03-11) claims 1, 4 | 1-9 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 May 2024** | **04 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/011533**

| Patent document cited in search report | | | Publication date (day/month/year) | Patent family member(s) | | Publication date (day/month/year) |
|---|---|---|---|---|---|---|
| JP | 2020-70115 | A | 07 May 2020 | (Family: none) | | |
| JP | 2020-187516 | A | 19 November 2020 | WO | 2020/230422 A1 | |
| JP | 6-67705 | A | 11 March 1994 | (Family: none) | | |

Form PCT/ISA/210 (patent family annex) (July 2022)

**EP 4 657 337 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7152938 B

- JP 2023058419 A